(19) **Europäisches Patentamt / European Patent Office / Office européen des brevets**

(11) **EP 4 512 686 A1**

(12) # EUROPEAN PATENT APPLICATION

(43) Date of publication:
26.02.2025 Bulletin 2025/09

(21) Application number: 23192700.5

(22) Date of filing: 22.08.2023

(51) International Patent Classification (IPC):
$B60W\ 60/00^{(2020.01)}$     $G06N\ 3/0455^{(2023.01)}$
$G06N\ 3/0499^{(2023.01)}$     $G06N\ 3/096^{(2023.01)}$

(52) Cooperative Patent Classification (CPC):
G06N 3/0455; G06N 3/0499; G06N 3/096

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GM Cruise Holdings LLC
San Francisco, CA 94107 (US)

(72) Inventors:
• GRAZIOLI, Filippo
San Francisco, 94107 (US)
• MÖLLER, Sven
San Francisco, 94107 (US)
• UNZUETA, Marc
San Francisco, 94107 (US)
• MEYER, Michael
San Francisco, 94107 (US)

(74) Representative: Berkenbrink, Kai-Oliver
Patentanwälte Becker & Müller
Turmstrasse 22
40878 Ratingen (DE)

(54) **MULTI-SENSOR VISION FOR AUTONOMOUS VEHICLE BASED ON PRIVILEGED INFORMATION LEARNIN**

(57)     A computer vision module facilitates multi-sensor vision of AVs based on privileged information learning. The module may input first sensor data captured by a first sensor into an already-trained privileged model, input second sensor data captured by a second sensor into a first backbone of a target model, and input third sensor data captured by a third sensor into a second backbone of the target model. The three sensors may be of different types. To train the target model, internal parameters of the target model may be modified to minimize a loss, which may include a privilege loss, which indicates a difference between a latent representation of the first sensor data and a latent representation of the second sensor data, and another privileged loss, which indicates a difference between the latent representation of the first sensor data and a latent representation of the third sensor data.

**FIG. 4**

EP 4 512 686 A1

**FIG. 5**

2

**Description**

TECHNICAL FIELD OF THE DISCLOSURE

The present disclosure relates generally to autonomous vehicles (AVs) and, more specifically, to multi-sensor vision for AVs based on privileged information learning.

BACKGROUND

An AV is a vehicle that is capable of sensing and navigating its environment with little or no user input. An AV may sense its environment using sensing devices such as Radio Detection and Ranging (RADAR), Light Detection and Ranging (LIDAR), image sensors, cameras, and the like. An AV system may also use information from a global positioning system (GPS), navigation systems, vehicle-to-vehicle communication, vehicle-to-infrastructure technology, and/or drive-by-wire systems to navigate the vehicle. As used herein, the phrase "AV" includes both fully autonomous and semi-autonomous vehicles.

BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:

Figure (FIG.) 1 illustrates a system including a fleet of AVs that can provide services to users, according to some embodiments of the present disclosure;
FIG. 2 is a block diagram showing a fleet management system, according to some embodiments of the present disclosure;
FIG. 3 is a block diagram showing a computer vision module, according to some embodiments of the present disclosure;
FIG. 4 illustrates a privileged information learning process, according to some embodiments of the present disclosure;
FIG. 5 illustrates multi-sensor based privileged information learning processes, according to some embodiments of the present disclosure;
FIG. 6 is a block diagram showing a sensor suite, according to some embodiments of the present disclosure;
FIG. 7 is a block diagram showing an onboard computer, according to some embodiments of the present disclosure; and
FIG. 8 is a flowchart showing a method of multi-sensor based privileged information learning, according to some embodiments of the present disclosure.

DESCRIPTION OF EXAMPLE EMBODIMENTS OF THE DISCLOSURE

*Overview*

The systems, methods and devices of this disclosure each have several innovative aspects, no single one of which is solely responsible for all of the desirable attributes disclosed herein. Details of one or more implementations of the subject matter described in this Specification are set forth in the description below and the accompanying drawings.

AVs can provide driverless services, such as ride services, delivery services, and so on. A person can request an AV to pick him/her up from a location and drop him/her off at another location. With the autonomous driving features of the AV, the person does not have to drive during the ride and can be a passenger of the AV. The AV can navigate from the pickup location to the drop-off location with no or little user input. AVs can provide other driverless services too, such as delivery service. A person can request an AV to deliver one or more items from one location to another location, and the person does not have to drive or be a passenger of the AV for the delivery.

Driverless operations of AVs are usually based on computer vision. Multimodal deep learning models have been used to tackle a broad range of computer vision tasks, such as object detection, road scene segmentation, and so on. Data modalities used for computer vision include data captured by various types of sensors, such as RADAR sensor, LIDAR sensor, camera sensor, and so on. Different data modalities may present different advantages and disadvantages. For instance, camera sensors can be cheap and provide rich information about the color and texture of objects. However, camera data can present high light variability and lack three-dimensional information. RADAR data, on the other hand, can lack color and texture, but can be invariant to the light conditions and reliable in bad weather situations. LIDAR sensors are relatively expensive but can provide accurate three-dimensional information. To scale driverless services of AVs, it can be important to minimize the production costs of AVs while preserving the safety and reliability of the system. One option is to employ more RADAR sensors and cameras and reduce usage of LIDAR sensors.

Embodiments of the present disclosure provide an AV vision platform that can facilitate multi-sensor vision based on privileged information learning. For instance, a computer vision module may train a target model for multi-sensor vision using knowledge learnt by a privileged model. The target model and privileged model may be configured to use data captured by different types of sensors for perception.

In various embodiments of the present disclosure, the computer vision module may input first sensor data captured by a first sensor into the privileged model after the privileged model is trained. The computer vision module may also input second sensor data captured by a second sensor into the first backbone of a target model and input third sensor data captured by a third sensor into a second backbone of the target model. The three sensors may be of different types. In an example, the first sensor may be a LIDAR sensor. The second sensor may be a camera sensor. The third sensor may be a RADAR sensor. In some embodiments (e.g., embodiments with technical or economical constraints), the first sensor may be used for dataset collection, but not for deployment on the AV. Hence, the privileged model would only be available at training time.

To train the target model, internal parameters of the target model may be modified to minimize a loss. The loss may be an aggregation (e.g., a weighted sum) of a first privilege loss and a second privileged loss. The first privileged loss may indicate a difference between a latent representation of the first sensor data, which may be generated by a hidden layer in the privileged model, and a latent representation of the second sensor data, which may be generated by a hidden layer in the first backbone of the target model. The second privileged loss may indicate a difference between the latent representation of the first sensor data and a latent representation of the third sensor data, which may be generated by a hidden layer in the second backbone of the target model.

The target model may include a fusion module that can fuse the latent representations of the second sensor data and the latent representations of the third sensor data into a combined latent representation, which may be used by a head module of the target model to generate a label of the second sensor data and the third sensor data. The loss for training the target model may also include a task loss that indicates a difference between the label generated by the target model using the second sensor data and the third sensor data and a corresponding ground-truth label of the second sensor data and the third sensor data.

Even though the target model described above has two backbones, the target model may include a single backbone or more than two backbones in other cases. Also, the fusion of the latent representations generated by different backbones may be fused before privileged information learning. The target model may be trained based on a privileged loss indicating a difference between the combined latent representation and the latent representation of the first sensor data.

In the present disclosure, the privileged model can be trained for computer vision based on LIDAR data and then used to train the target model. Knowledge learnt by the privileged model using the expensive LIDAR data can be distilled into the target model. Using the privileged information learning, perceptions made by the target model using less expensive sensor data can mimic the perceptions that the target model would have made if more expensive LIDAR data was actually available.

As will be appreciated by one skilled in the art, aspects of the present disclosure, in particular aspects of the volunteering platform, described herein, may be embodied in various manners (e.g., as a method, a system, a computer program product, or a computer-readable storage medium). Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by one or more hardware processing units, e.g., of one or more computers. In various embodiments, different steps and portions of the steps of each of the methods described herein may be performed by different processing units. Furthermore, aspects of the present disclosure may take the form of a computer program product embodied in one or more computer-readable medium(s), preferably non-transitory, having computer-readable program code embodied, e.g., stored, thereon. In various embodiments, such a computer program may, for example, be downloaded (updated) to the existing devices and systems (e.g., to the existing perception system devices or their controllers, etc.) or be stored upon manufacturing of these devices and systems.

The following detailed description presents various descriptions of specific certain embodiments. However, the innovations described herein can be embodied in a multitude of different ways, for example, as defined and covered by the claims or select examples. In the following description, reference is made to the drawings where like reference numerals can indicate identical or functionally similar elements. It will be understood that elements illustrated in the drawings are not necessarily drawn to scale. Moreover, it will be understood that certain embodiments can include more elements than illustrated in a drawing or a subset of the elements illustrated in a drawing. Further, some embodiments can incorporate any suitable combination of features from two or more drawings.

The following disclosure describes various illustrative embodiments and examples for implementing the features and functionality of the present disclosure. While particular components, arrangements, or features are described below in connection with various example embodiments, these are merely examples used to simplify the present disclosure and are not intended to be limiting.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above", "below", "upper", "lower", "top", "bottom", or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature, length, width, etc.) of an element, operations, or conditions, the phrase "between X and Y" represents a range that includes X and Y.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or system. Also, the term "or" refers to an inclusive or and not to an exclusive or.

As described herein, one aspect of the present technology is the gathering and use of data available from various sources to improve quality and experience. The present disclosure contemplates that in some instances, this gathered data may include personal information. The present disclosure contemplates that the entities involved with such personal information respect and value privacy policies and practices.

Other features and advantages of the disclosure will be apparent from the following description and the claims.

The systems, methods and devices of this disclosure each have several innovative aspects, no single one of which is solely responsible for all of the desirable attributes disclosed herein. Details of one or more implementations of the subject matter described in this Specification are set forth in the description below and the accompanying drawings.

*Example System with AV Fleet*

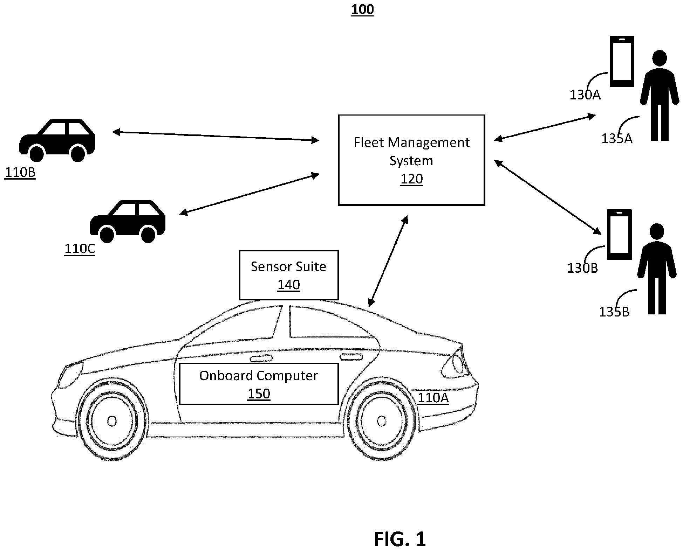

FIG. 1 illustrates a system 100 including a fleet of AVs that can provide services to users, according to some embodiments of the present disclosure. The system 100 includes AVs 110A-110C (collectively referred to as "AVs 110" or "AV 110"), a fleet management system 120, and client devices 130A and 130B (collectively referred to as "client devices 130" or "client device 130"). The client devices 130A and 130B are associated with users 135A and 135B, respectively. The AV 110A includes a sensor suite 140 and an onboard computer 150. Even though not shown in FIG. 1, the AV 110B or 110C can also include a sensor suite 140 and an onboard computer 150. In other embodiments, the system 100 may include more, fewer, or different components. For example, the fleet of AVs 110 may include a different number of AVs 110 or a different number of client devices 130.

The fleet management system 120 manages the fleet of AVs 110. The fleet management system 120 may manage one or more services that the fleet of AVs 110 provides to the users 135. An example service is a ride service, e.g., an AV 110 provides a ride to a user 135 from a first location to a second location. Another example service is a delivery service, e.g., an AV 110 delivers one or more items from or to the user 135. The fleet management system 120 can select one or more AVs 110 (e.g., AV 110A) to perform a particular service, and instructs the selected AV to drive to one or more particular locations associated with the service (e.g., a first address to pick up user 135A, and a second address to pick up user 135B). The fleet management system 120 also manages fleet maintenance tasks, such as fueling, inspecting, and servicing of the AVs. As shown in FIG. 1, the AVs 110 communicate with the fleet management system 120. The AVs 110 and fleet management system 120 may connect over a network, such as the Internet.

In some embodiments, the fleet management system 120 receives service requests for the AVs 110 from the client devices 130. In an example, the user 135A accesses an app executing on the client device 130A and requests a ride from a pickup location (e.g., the current location of the client device 130A) to a destination location. The client device 130A transmits the ride request to the fleet management system 120. The fleet management system 120 selects an AV 110 from the fleet of AVs 110 and dispatches the selected AV 110A to the pickup location to carry out the ride request. In some embodiments, the ride request further includes a number of passengers in the group. In some embodiments, the ride request indicates whether a user 135 is interested in a shared ride with another user travelling in the same direction or along the same portion of a route. The ride request, or settings previously entered by the user 135, may further indicate whether the user 135 is interested in interaction with another passenger.

The fleet management system 120 may provide the AVs 110 tools that can be used to facilitate driverless operations of the AVs 110. In some embodiments, the fleet management system 120 may provide perception models to the AVs 110. The AVs 110 may use the perception models to perceive their environments and control their operations. A perception model may receive sensor data (e.g., sensor data generated by the sensor suite 140 of an AV 110) as input and output one or more labels. A label may indicate a classification of an object, detection of a feature, and so on. A perception model may be a deep learning model, such as a neural network comprising one or more layers. The fleet management system 120 may train a perception model using another perception model that has been trained, e.g., through privileged information learning.

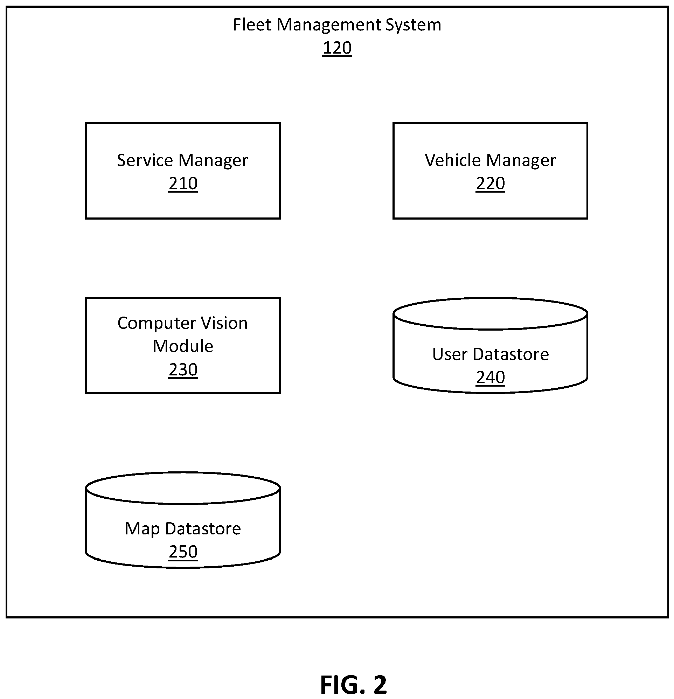

In some embodiments, the fleet management system 120 may provide the AVs 110 information for navigating the AVs 110 during the operations of the AVs. For example, the fleet management system 120 may provide the AVs 110 maps (e.g., semantic maps, vector maps, etc.) of environments where the AVs operate. As another example, the fleet management system 120 may provide an AV 110 information collected by other AVs 110 operating in the same environment as the AV 110. Certain aspects of the fleet management system 120 are described further in relation to FIG. 2.

A client device 130 is a device capable of communicating with the fleet management system 120, e.g., via one or more networks. The client device 130 can transmit data to the fleet management system 120 and receive data from the fleet management system 120. The client device 130 can also receive user input and provide output. In some embodiments, outputs of the client devices 130 are in human-perceptible forms, such as text, graphics, audio, video, and so on. The client device 130 may include various output components, such as monitors, speakers, headphones, projectors, and so on. The client device 130 may be a desktop or a laptop computer, a smartphone, a mobile telephone, a personal digital assistant (PDA), or another suitable device.

In some embodiments, a client device 130 executes an application allowing a user 135 of the client device 130 to interact with the fleet management system 120. The application may include codes provided by the fleet management system 120. For example, a client device 130 executes a browser application to enable interaction between the client device 130 and the fleet management system 120 via a network. In another embodiment, a client device 130 interacts with the fleet management system 120 through an application programming interface (API) running on a native operating system of the client device 130, such as IOS® or ANDROID™. The application may be provided and maintained by the fleet management system 120. The fleet management system 120 may also update the application and provide the update to the client device 130. In some embodiments, the application may be downloaded from the fleet management system 120 and installed on the client device 130.

In some embodiments, a user 135 may submit service requests to the fleet management system 120 through a client device 130. A client device 130 may provide its user 135 a user interface (UI), through which the user 135 can make service requests, such as ride request (e.g., a request to pick up a person from a pickup location and drop off the person at a destination location), delivery request (e.g., a request to delivery one or more items from a location to another location), and so on. The UI may allow users 135 to provide locations (e.g., pickup location, destination location, etc.) or other information that would be needed by AVs 110 to provide services requested by the users 135.

The client device 130 may provide the user 135 an UI through which the user 135 can interact with the AV 110 that provides a ride to the user 135. The AV 110 may transmit one or more messages to the UI. The messages may be associated with one or more behaviors performed by the AV 110 for providing the ride to the user 135. The user 135 may view the messages in the UI. The UI may also allow the user 135 to interact with the messages. In some embodiments, the UI allows the user 135 to provide a comment or rate on the AV behaviors or the ride. The UI may also allow the user 135 to modify one or more settings of the ride in light of the AV behaviors.

The client device 130 may also provide the user 135 an UI through which the user 135 can interact with the fleet management system 120. For instance, the UI enables the user to submit a request for assistance to the fleet management system 120 through a network or a telephone service (e.g., a customer service hotline). The UI can further facilitate a communication between the user 135 and an agent of the fleet management system 120 who can provide the requested assistance. The UI may further enable the user to comment on or rate the agent.

The AV 110 is preferably a fully autonomous automobile, but may additionally or alternatively be any semi-autonomous or fully autonomous vehicle, e.g., a boat, an unmanned aerial vehicle, a driverless car, etc. Additionally, or alternatively, the AV 110 may be a vehicle that switches between a semi-autonomous state and a fully autonomous state and thus, the AV may have attributes of both a semi-autonomous vehicle and a fully autonomous vehicle depending on the state of the vehicle. In some embodiments, some or all of the vehicle fleet managed by the fleet management system 120 are non-autonomous vehicles dispatched by the fleet management system 120, and the vehicles are driven by human drivers according to instructions provided by the fleet management system 120.

The AV 110 may include a throttle interface that controls an engine throttle, motor speed (e.g., rotational speed of electric motor), or any other movement-enabling mechanism; a brake interface that controls brakes of the AV (or any other movement-retarding mechanism); and a steering interface that controls steering of the AV (e.g., by changing the angle of wheels of the AV). The AV 110 may additionally or alternatively include interfaces for control of any other vehicle functions, e.g., windshield wipers, headlights, turn indicators, air conditioning, etc.

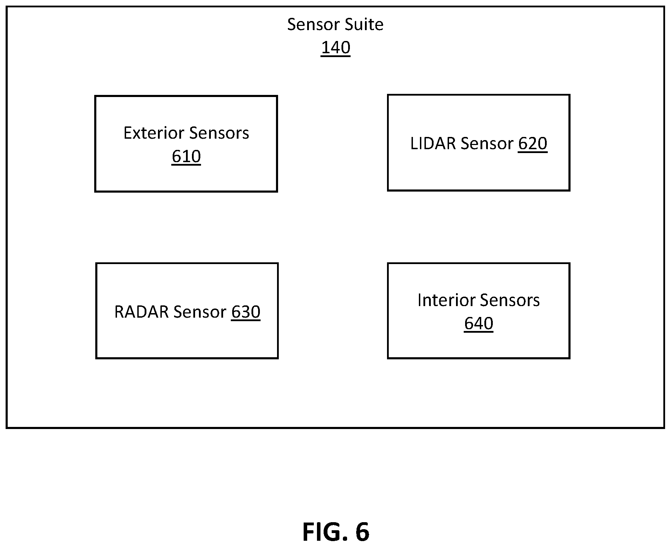

The sensor suite 140 may include a computer vision system, localization sensors, and driving sensors. For example, the sensor suite 140 may include interior and exterior cameras, RADAR sensors, sonar sensors, LIDAR sensors, thermal sensors, wheel speed sensors, inertial measurement units (IMUs), accelerometers, microphones, strain gauges, pressure monitors, barometers, thermometers, altimeters, ambient light sensors, etc. The sensors may be located in various positions in and around the AV 110. For example, the AV 110 may have multiple cameras located at different positions around the exterior and/or interior of the AV 110. Certain sensors of the sensor suite 140 are described further in relation to FIG. 6.

The onboard computer 150 is connected to the sensor suite 140 and functions to control the AV 110 and to process sensed data from the sensor suite 140 and/or other sensors to determine the state of the AV 110. Based upon the vehicle state and programmed instructions, the onboard computer 150 modifies or controls the behavior of the AV 110. The onboard computer 150 may be preferably a general-purpose computer adapted for I/O communication with vehicle control systems and sensor suite 140, but may additionally or alternatively be any suitable computing device. The onboard computer 150 is preferably connected to the Internet via a wireless connection (e.g., via a cellular data connection). Additionally or alternatively, the onboard computer 150 may be coupled to any number of wireless or wired communication systems.

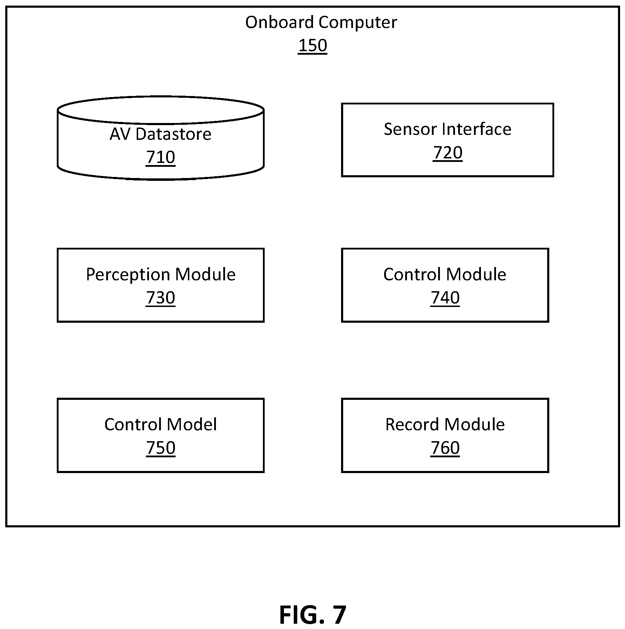

In some embodiments, the onboard computer 150 is in communication with the fleet management system 120, e.g., through a network. The onboard computer 150 may receive instructions from the fleet management system 120 and control behavior of the AV 110 based on the instructions. For example, the onboard computer 150 may receive from the fleet management system 120 an instruction for providing a ride to a user 135. The instruction may include information of the ride (e.g., pickup location, drop-off location, intermediate stops, etc.), information of the user 135 (e.g., identifying information of the user 135, contact information of the user 135, etc.). The onboard computer 150 may determine a navigation route of the AV 110 based on the instruction. As another example, the onboard computer 150 may receive from the fleet management system 120 a request for sensor data to be used by the ride evaluation platform. The onboard computer 150 may control one or more sensors of the sensor suite 140 to detect the user 135, the AV 110, or an environment surrounding the AV 110 based on the instruction and further provide the sensor data from the sensor suite 140 to the fleet management system 120. The onboard computer 150 may transmit other information requested by the fleet management system 120, such as perception of the AV 110 that is determined by a perception module of the onboard computer 150, historical data of the AV 110, and so on. Certain aspects of the onboard computer 150 are described further in relation to FIG. 7.

*Example Fleet Management System*

FIG. 2 is a block diagram showing the fleet management system, according to some embodiments of the present disclosure. The fleet management system 120 includes a service manager 210, a vehicle manager 220, a computer vision module 230, a user datastore 240, and a map datastore 250. In alternative configurations, different and/or additional components may be included in the fleet management system 120. Further, functionality attributed to one component of the fleet management system 120 may be accomplished by a different component included in the fleet management system 120 or a different system than those illustrated, such as the onboard computer 150.

The service manager 210 manages services that the fleet of AVs 110 can provide. In some embodiments, the service manager 210 provides interfaces to client devices, such as headsets, smartphones, tablets, computers, and so on. For example, the service manager 210 may provide one or more apps or browser-based interfaces that can be accessed by users, such as the users 135, using client devices, such as the client devices 130. The service manager 210 enables the users to submit requests to a ride service provided or enabled by the fleet management system 120. In particular, the service manager 210 enables a user to submit a ride request that includes an origin (or pickup) location and a destination (or drop-off) location. The ride request may include additional information, such as a number of passengers travelling with the user, and whether or not the user is interested in a shared ride with one or more other passengers not known to the user.

The service manager 210 can also enable users to select ride settings. The service manager 210 may enable a user to opt-in to some, all, or none of the virtual activities offered by the ride service provider. The service manager 210 may further enable the user to opt-in to certain monitoring features, e.g., to opt-in to have the interior sensors 440 obtain sensor data of the user. The service manager 210 may explain how this data is used by the service manager 210 (e.g., for providing support to the user, etc.) and may enable users to selectively opt-in to certain monitoring features, or to opt-out of all of the monitoring features. In some embodiments, the user support platform may provide a modified version of a virtual activity if a user has opted out of some or all of the monitoring features.

The vehicle manager 220 manages and communicates with the fleet of AVs 110. The vehicle manager 220 assigns the AVs 110 to various tasks and directs the movements of the AVs 110 in the fleet. In some embodiments, the vehicle manager 220 includes additional functionalities not specifically shown in FIG. 2. For example, the vehicle manager 220 instructs AVs 110 to drive to other locations while not servicing a user, e.g., to improve geographic distribution of the fleet, to anticipate demand at particular locations, etc. The vehicle manager 220 may also instruct AVs 110 to return to an AV 110 facility for fueling, inspection, maintenance, or storage. As another example, the vehicle manager 220 may include functionalities of the onboard computer 150, such as functionalities related to modeling restricted traffic zones.

In some embodiments, the vehicle manager 220 selects AVs from the fleet to perform various tasks and instructs the AVs to perform the tasks. For example, the vehicle manager 220 receives a ride request from the service manager 210. The vehicle manager 220 selects an AV 110 to service the ride request based on the information provided in the ride request, e.g., the origin and destination locations. If multiple AVs 110 in the AV 110 fleet are suitable for servicing the ride request, the vehicle manager 220 may match users for shared rides based on an expected compatibility. For example, the vehicle manager 220 may match users with similar user interests, e.g., as indicated by the user datastore 240. In some embodiments, the vehicle manager 220 may match users for shared rides based on previously-observed compatibility or incompatibility when the users had previously shared a ride.

The vehicle manager 220 or another system may maintain or access data describing each of the AVs in the fleet of AVs 110, including current location, service status (e.g., whether the AV 110 is available or performing a service, when the AV 110 is expected to become available, whether the AV 110 is schedule for future service, etc.), fuel or battery level, and so on. The vehicle manager 220 may select AVs for service in a manner that optimizes one or more additional factors, including fleet distribution, fleet utilization, and energy consumption. The vehicle manager 220 may interface with one or more predictive algorithms that project future service requests and/or vehicle use, and select vehicles for services based on the projections.

The vehicle manager 220 transmits instructions dispatching the selected AVs. In particular, the vehicle manager 220 instructs a selected AV 110 to drive autonomously to a pickup location in the ride request and to pick up the user and, in some cases, to drive autonomously to a second pickup location in a second ride request to pick up a second user. The vehicle manager 220 may dispatch the same AV 110 to pick up additional users at their pickup locations, e.g., the AV 110 may simultaneously provide rides to three, four, or more users. The vehicle manager 220 further instructs the AV 110 to drive autonomously to the respective destination locations of the users.

The computer vision module 230 trains perception models, including perception models that can provide multi-sensor vision. In some embodiments, the computer vision module 230 may train a perception model that after being trained, can be used to train other perception models that will be used by AVs 110 for computer vision. The trained perception model is referred to as a privileged model, and the to-be-trained perception models are referred to as target models. The privileged model may be trained to receive a particular type of sensor data, e.g., point clouds from LIDAR sensors, while a target model is to be trained to receive a different type of sensor data, e.g., signals from RADAR sensors, images from camera sensors, and so on. To train a target model using a privileged model, the computer vision module 230 may determine one or more privileged losses. In embodiments where the target model has multiple backbones, the computer vision module 230 may determine a different privileged loss for each backbone. Different backbones may process different types of sensor data.

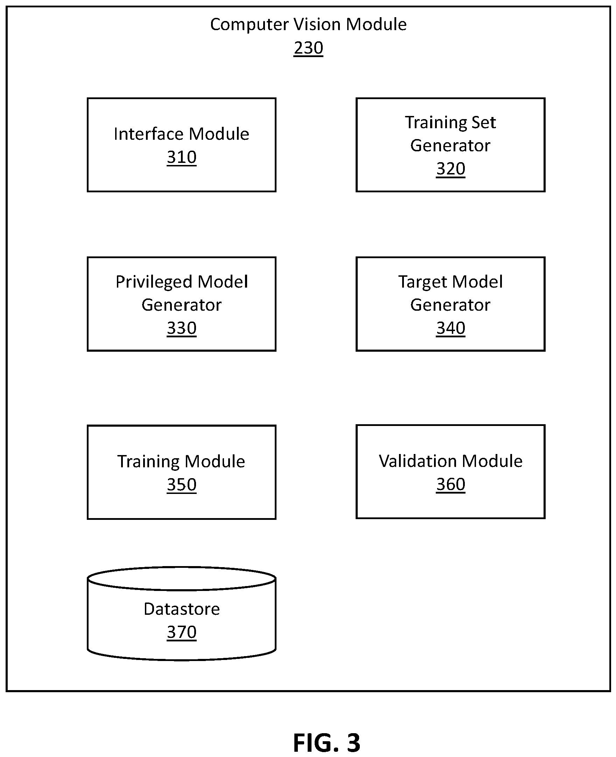

A privileged loss is a measurement of the difference between a latent representation generated by one or more hidden layers in the target model and a latent representation generated by one or more hidden layers in the privileged model. The computer vision module 230 may also use a task loss that measures the difference between a label generated by the target model and a ground-truth label. During the process of training the target model, the computer vision module 230 may modify one or more internal parameters of the target model to reduce or minimize the one or more privileged losses, the task loss, or some combination thereof. After the target model is trained, the computer vision module 230 may provide the target model to AVs 110 for computer vision. Certain aspects of the computer vision module 230 are described below in conjunction with FIG. 3.

The user datastore 240 stores information associated with users of the fleet management system 120, including users requesting AV services and users offering voluntary assistance. A user may be an individual, a group of individuals, or an entity (e.g., business, organization, etc.). The information associated with a user may be stored as a user profile. A user profile may include information describing one or more attributes of the user. Examples of information stored in a user profile include biographic, demographic, and other types of descriptive information, such as work experience, educational history, gender, hobbies or preferences, location and the like. A user profile may include declarative information about the user that was explicitly shared by the user or information inferred by the fleet management system 120. A user profile may also store other information provided by the user, such as audio, images, videos, and so on.

A user profile may also maintain references to services requested by the user or assistance offered by the user. The information may be provided by the user, e.g., through the service manager 210, or inferred by another component of the fleet management system 120, e.g., by the vehicle manager 220. The user profile may further include information associated with services that have been, are being received, or will be received by the user and facilitated by voluntary assistance. The information may be provided by the user, e.g., through the service manager 210, or inferred by another component of the fleet management system 120, e.g., by the vehicle manager 220.

The user datastore 240 may also store ride information associated with users of the ride service, e.g., the users 135. The user datastore 240 may store an origin location and a destination location for a user's current ride. The user datastore 240 may also store historical ride data for a user, including origin and destination locations, dates, and times of previous rides taken by a user. The historical data of the user may also include information associated with historical support requests made by the user during the previous rides, such as sensor data associated with the historical support requests, communications of the user with agents that serviced the historical support requests, states of the user during the communications, information of AVs 110 associated with the historical support requests, and so on. The historical data of the user may also include information associated with communications of AVs with the user for AV behaviors in historical rides taken by the user. In some cases, the user datastore 240 may further store future ride data, e.g., origin and destination locations, dates, and times of planned rides that a user has scheduled with the ride service provided by the AVs 110 and fleet management system 120. Some or all of the data of a user in the user datastore 240 may be received through the service manager 210, an onboard computer (e.g., the onboard computer 150), a sensor suite of AVs 110 (e.g., the sensor suite 140), a third-party system associated with the user and the fleet management system 120, or other systems or devices.

In some embodiments, the user datastore 240 also stores data indicating user preferences associated with rides in AVs. The fleet management system 120 may include one or more learning modules (not shown in FIG. 2) to learn user interests based on user data. For example, a learning module may compare locations in the user datastore 240 with map datastore 250 to identify places the user has visited or plans to visit. For example, the learning module may compare an origin or destination address for a user in the user datastore 240 to an entry in the map datastore 250 that describes a building at that address. The map datastore 250 may indicate a building type, e.g., to determine that the user was picked up or dropped off at an event center, a restaurant, or a movie theater. In some embodiments, the learning module may further compare a date of the ride to event data from another data source (e.g., a third-party event data source, or a third-party movie data source) to identify a more particular interest, e.g., to identify a performer who performed at the event center on the day that the user was picked up from an event center, or to identify a movie that started shortly after the user was dropped off at a movie theater. This interest (e.g., the performer or movie) may be added to the user datastore 240. As another example, a learning module may learn user tolerance or preference for AV behaviors, e.g., based on information associated with communications of AVs with the user for AV behaviors in historical rides taken by the user. The learning module may learn that the user has a high tolerance for an AV behavior based on information indicating that the user had no bad feelings for the AV behavior undesirable in one or more previous rides. Similarly, the learning module may learn that the user has a low tolerance for a type of AV behavior based on information indicating that the user had negative sentiments towards the AV behavior in one or more previous rides.

The map datastore 250 stores one or more maps of environments through which the AVs 110 may travel. A map may be a semantic map or vector map. The map datastore 250 includes data describing roadways, such as e.g., locations of roadways, connections between roadways, roadway names, speed limits, traffic flow regulations, toll information, etc. The map datastore 250 may further include data describing buildings (e.g., locations of buildings, building geometry, building types), and data describing other objects (e.g., location, geometry, object type) that may be in the environments of AV 110. The map datastore 250 may also include data describing other features, such as bike lanes, sidewalks, crosswalks, traffic lights, parking lots, signs, billboards, etc.

Some of the map datastore 250 may be gathered by the fleet of AVs 110. For example, images obtained by the exterior sensors 610 of the AVs 110 may be used to learn information about the AVs' environments. As one example, AVs may capture images in a residential neighborhood during a winter holiday season, and the images may be processed to identify which homes have winter holiday decorations. The images may be processed to identify particular features in the environment. For the winter holiday decoration example, such features may include light color, light design (e.g., lights on trees, roof icicles, etc.), types of blow-up figures, etc. The fleet management system 120 and/or AVs 110 may have one or more image processing modules to identify features in the captured images or other sensor data. This feature data may be stored in the map datastore 250. In some embodiments, certain feature data (e.g., seasonal data, such as winter holiday decorations, or other features that are expected to be temporary) may expire after a certain period of time. In some embodiments, data captured by a second AV 110 may indicate that a previously-observed feature is no longer present (e.g., a blow-up figure has been removed) and in response, the fleet management system 120 may remove this feature from the map datastore 250.

FIG. 3 is a block diagram showing the computer vision module 230, according to some embodiments of the present disclosure. The vehicle manager 220 includes an interface module 310, a training set generator 320, a privileged model generator 330, a target model generator 340, a training module 350, a validation module 360, and a datastore 370. In alternative configurations, different and/or additional components may be included in the computer vision module 230. Further, functionality attributed to one component of the computer vision module 230 may be accomplished by a different component included in the computer vision module 230, a different component in the fleet management system 120, the onboard computer 150, or a different system or device.

The interface module 310 facilitates communications of the computer vision module 230 with other systems. For example, the interface module 310 establishes communications between the computer vision module 230 with an external database to receive data that can be used to train perception models or data that can be input into perception models to perform computer vision tasks. As another example, the interface module 310 supports the computer vision module 230 to distribute trained perception models to other systems, e.g., onboard computers of AVs.

The training set generator 320 forms training datasets that will be used to train perception models. A training dataset includes training samples and ground-truth labels. The training dataset may include one or more ground-truth labels for each training sample. A ground-truth label of a training sample may be a known or verified label that constitutes a correct perception, e.g., correction identification of an object, correct detection of a feature, and so on. In an example where a perception model is trained to recognize objects in images, the training dataset includes training images and ground-truth labels that indicate classifications of objects in the training images. An example of a ground-truth label in the example may be a number that indicates the probability that an object belongs to a class. Other examples of a ground-truth label may include coordinates in a three-dimensional (3D) space for 3D detection, segmentation masks for semantic segmentation, and so on. The object may be associated with other ground-truth labels that indicate probabilities that the object belongs to other classes.

In some embodiments, the training set generator 320 may also form validation datasets for validating performance of trained perception models by the validation module 260. A validation dataset may include validation samples and ground-truth labels of the validation samples. The validation dataset for a perception model may include different samples from the training dataset used for training the perception model. In an embodiment, a part of a training dataset may be used to initially train a perception model, and the rest of the training dataset may be held back as a validation subset used by the validation module 260 to validate performance of the trained perception model. The portion of the training dataset not including the validation subset may be used to train the perception model.

The privileged model generator 330 generates privileged models to be used to train target models through privileged information learning. In some embodiments, the privileged model generator 330 may generate a single privileged model for training a single target model or multiple target models or may generate multiple privileged models to train a single target model. A privileged model may be a perception model that after being trained, can be used to train other perception models. The privileged model may receive sensor data (e.g., point cloud) captured by a particular type of sensor (e.g., LIDAR sensor) as input and output labels of objects or features detected by the type of sensor. The privileged model generator 330 may generate a privileged model that includes a sensor data encoder, a backbone network, and a head. The sensor data encoder may encode sensor data, e.g., by converting the sensor data into a predetermined form, and transmits the encoded sensor data to the backbone network.

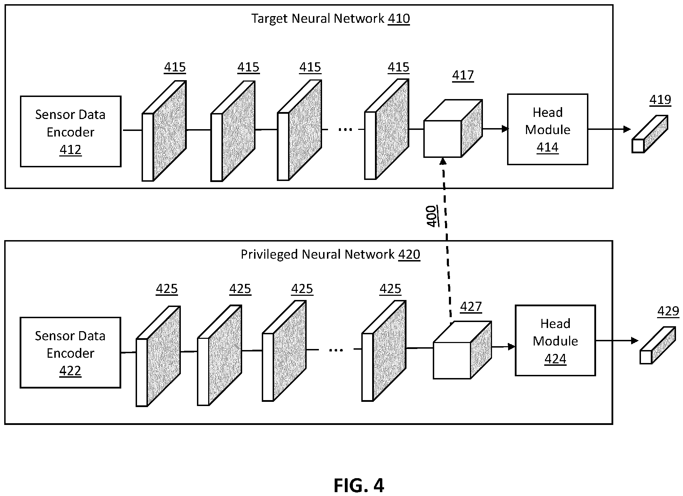

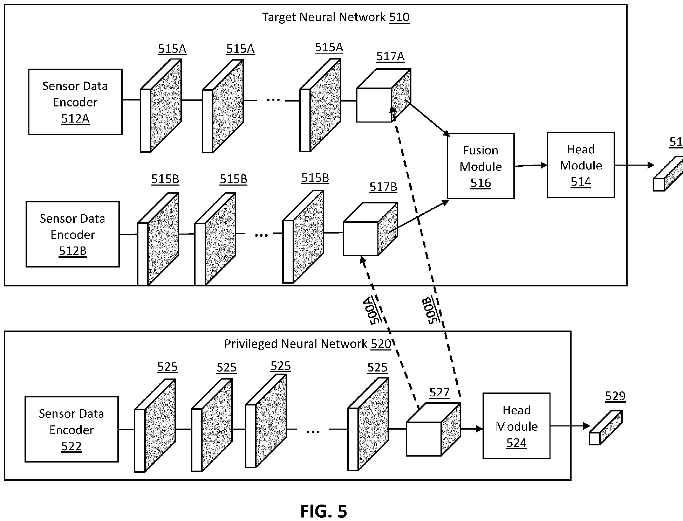

The backbone network may have an architecture including a plurality of layers, such as convolutional layer, pooling layer, and so on. The privileged model generator 330 also generates internal connections between layers within the privileged model. An internal connection may connect two layers. The second layer may be arranged after the first layer in the privileged model. The internal connection facilitates data transfer between the two layers. For instance, the first layer can send features to the second layer through the internal connection. The second layer receives the features and can aggregate the features from the first layer with features generated in the second layer to output aggregated features. An internal connection may be bi-directional, e.g., the second layer can also send data to the first layer. The head of the privileged model can make a determination (e.g., perception, prediction, etc.) using output of the backbone network. For instance, the head may output one or more labels for one or more objects or features detected by the sensor. Examples of privileged models include the privileged neural network 420 in FIG. 4 and the privileged neural network 520 in FIG. 5.

The target model generator 340 generates target models. A target model is a perception model that after being trained, can be used to perform computer vision tasks for controlling AV operations. The target model generator 340 may generate a target model based on the types of sensors that AVs would use for perception. In some embodiments, a target model may receive sensor data captured by a single type of sensor as input and output labels for single-sensor vision. In other embodiments, a target model may receive sensor data captured by multiple types of sensor and output labels for multi-sensor vision.

A target model may include one or more sensor data encoders, one or more backbone networks, and a head. Each backbone network may correspond to a particular type of sensor data that can be encoded by a corresponding sensor data encoder. In embodiments where the target model has multiple backbone networks, the target model may also include a fusion module that can fuse outputs of the backbone networks to generate a combined output. The combined output can be provided to the head for generating outputs of the target model. Examples of target models include the target neural network 410 in FIG. 4 and the target neural network 510 in FIG. 5.

The training module 350 trains perception models, such as privileged models generated by the privileged model generator 330 and target models generated by the target model generator 340. The training module 350 may train a privileged model first, then use the privileged model to train one or more target models through privileged information learning. In a privileged information learning process, the already-trained privileged model is a teacher, and the target model is a student that can receive knowledge from the teacher.

The teacher and student may have different inputs, e.g., sensor data from different types of sensors. The training module 350 may force a latent feature map extracted from the target model to mimic a latent feature map extracted from the privileged model by changing internal parameters (e.g., weights of convolutions, etc.) of the target model. A latent feature map may be an output of a hidden layer in the model. In some embodiments, the latent feature map is a latent representation of the sensor data received by the model.

In some embodiments, the training module 350 may define a privileged loss to measure a difference between a latent feature map from the target model and a latent feature map from the privileged model. The privileged information learning process may be a process of minimizing the privileged loss. The privileged loss may be a feature distance between the two latent feature maps. In an embodiment, the feature distance may be measured using L1 norm, which may be denoted as $\sum_{i=0}^{N}|x_i - x'_i|$, where $x_i$ denotes an activation in one of the latent feature maps, $x'_i$ denotes an activation in the other latent feature map, and i denotes the index of the activation. In another embodiment, the feature distance may be measured using L2 norm, which may be denoted as $\sum_{i=0}^{N}(x_i - x'_i)^2$. In other embodiments, the feature distance may be measured using other norms.

In some embodiments (e.g., embodiments where the target model has multiple backbones), the training module 350 may define multiple privileged losses, each of which corresponds to a different backbone in the target model. The training module 350 may adjust internal parameters of the backbones based on the privileged losses. In some embodiments, the training module 350 may adjust internal parameters of the backbones to minimize an aggregation of the privileged losses. The aggregation may be a weighted sum. The internal parameters of the backbones may be updated collectively. In other embodiments, the internal parameters of the backbones may be updated separately. For instance, the training module 350 may adjust one or more internal parameters of a backbone to minimize the privileged loss for the backbone.

In addition to the privileged loss(es), the training module 350 may define a task loss of the target model. The task loss may measure a difference between a label generated by the target model for a training sample and a ground-truth label of the training sample. In embodiments where multiple training samples are used, the training module 350 may define a task loss based on an aggregation of the differences between labels generated by the target model and the ground-truth labels of the training samples. In some embodiments, the training module 350 may adjust internal parameters of the backbones to minimize an aggregation of the privileged loss(es) and the task loss. The aggregation may be a weighted sum.

In some embodiments, the training module 350 may stop adjusting the parameters in the merged network after a threshold condition is met. The threshold condition may be that a predetermined number of epochs are done, a target performance (e.g., an accuracy) of the target model is met, or other types of conditions. The trained target model can be used to handle computer vision tasks. In some embodiments, the target model, or parameters of the target model, may be sent to another system or device (e.g., onboard computers of AVs) for inference.

In some embodiments, the training module 350 may also determine hyperparameters for the training process. Hyperparameters may be different from parameters inside the perceptions models (e.g., weights). In some embodiments, the hyperparameters include variables which determine how the perception model is trained, such as batch size, number of epochs, etc. A batch size defines the number of training samples to work through before updating the parameters of the perception model. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the network. An epoch may include one or more batches. The number of epochs may be 10, 100, 500, 1000, or even larger.

The validation module 260 verifies performance (e.g., accuracy) of trained perception models, such as trained target models that are separated from their corresponding privileged models. The validation module 260 may determine an accuracy of a trained target model and determine whether the accuracy meets a threshold (e.g., a requirement for model accuracy). In response to determining that the accuracy of the target model meets the threshold, the validation module 260 may deploy the target model to another system or device, e.g., through the interface module 310. In some embodiments, the validation module 260 may also verify performance of merged networks or privileged models. For instance, the validation module 260 determines whether an accuracy of a merged network meets a threshold. In response to determining that the accuracy does not meet the threshold, the validation module 260 may instruct the training module 350 to further train the merged network. In response to determining that the accuracy meets the threshold, the validation module 260 may notify the training module 350 that the merged network has been sufficiently trained or instruct the training module 350 to separate the target model from the privileged model.

In some embodiments, the validation module 260 inputs samples in a validation dataset into the perception model and uses the outputs of the perception model to determine the model accuracy. In some embodiments, a validation dataset may be formed of some or all the samples in the training dataset. Additionally or alternatively, the validation dataset includes additional samples, other than those in the training sets. In some embodiments, the validation module 260 may determine an accuracy score measuring the precision, recall, or a combination of precision and recall of the perception model. The validation module 260 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The datastore 370 stores data associated with the computer vision module 230, such as data received, generated, or used by the computer vision module 230. For instance, the datastore 370 may store parameters (e.g., internal parameters, hyperparameters, etc.) of target models or privileged models generated by the target model generator 340, the privileged model generator 330, or the training module 350. The datastore 370 may also store training sets and validation sets used to train networks and validate networks. In some embodiments, the computer vision module 230 may be associated with multiple memories. The datastore 370 may include a random-access memory (RAM), such as a static RAM (SRAM), disk storage, nearline storage, online storage, offline storage, and so on.

*Example privileged information learning process*

FIG. 4 illustrates a privileged information learning process 400, according to some embodiments of the present disclosure. The privileged information learning process 400 is used to train a target neural network 410 using a privileged neural network 420 that is already trained. In some embodiments, the target neural network 410 is to be trained to perform perception tasks using a particular type of sensor, such as camera sensor, RADAR sensor, and so on. The privileged neural network 420 has been trained to perform perception tasks using another particular type of sensor, such as LIDAR sensors, and so on. The knowledge learnt by the privileged neural network 420 during the training can be injected into the target neural network 410 through the privileged information learning process 400. By doing this, it is possible to condition the prediction of the target network, incorporating information about the privileged sensor modalities.

In the embodiments of FIG. 4, the target neural network 410 includes a sensor data encoder 412, layers 415 (individually referred to as "layer 415"), and a head module 414. The privileged neural network 420 includes a sensor data encoder 422, layers 425 (individually referred to as "layer 425"), and a head module 424. In other embodiments, the target neural network 410 or the privileged neural network 420 may include more, fewer, or different components. For instance, the target neural network 410 or the privileged neural network 420 may include additional layers arranged between, before, or after the layers shown in FIG. 4. The privileged neural network 420 may include more or different layers from the target neural network 410.

The sensor data encoder 412 or 422 may encode sensor data, such as sensor data captured by sensors on AVs by detecting environments surrounding the AVs. In some embodiments, the sensor data encoder 412 or 422 may transform sensor data to one or more predetermined forms that can be processed by the layers 415 or 425. For instance, the sensor data encoder 412 or 422 may convert one or more images into a bird eye view map, a three-dimensional grid map, a point-based map, or other forms.

The layers 415 may be in a backbone network of the target neural network 410. The layers 425 may be in a backbone network of the privileged neural network 420. The layers 415 or layers 425 may be convolutional layers, pooling layers, self-attention layers, linear layers, non-linear layers, other types of layers, or some combination thereof. In some embodiments, one or more layers 425 in the privileged neural network may be aligned with one or more layers 415, or stages in the privileged neural network 420 may be aligned with stages in the target neural network 410. A stage may include one or more layers. For instance, the last layer (e.g., the last convolutional layer) in the target neural network 410 may be aligned with the last layer (e.g., the last convolutional layer) in the privileged neural network 420, or a stage including the last layer (e.g., the last convolutional layer) in the target neural network 410 may align with a stage including the last layer (e.g., the last convolutional layer) in the privileged neural network 420.

In the embodiments of FIG. 4, the last layer of the target neural network 410 outputs a latent representation 417 of the sensor data received by the target neural network 410. The last layer of the privileged neural network 420 outputs a latent representation 427 of the sensor data received by the privileged neural network 420. The latent representation 417 or 427 may be a feature map. In other embodiments, the latent representation 417 may be generated by a different layer in the target neural network 410. Similarly, the latent representation 427 may be generated by a different layer in the privileged neural network 420.

The head module 414 receives the latent representation 417 (or the output of the last layer) and processes the latent representation 417 to generate a label 419 of the sensor data received by the target neural network 410. The label 419 may indicate a perception by the target neural network 410, such as object identification, object classification, feature detection, and so on. The head module 424 receives the latent representation 427 (or the output of the last layer) and processes the latent representation 427 to generate a label 429 of the sensor data received by the privileged neural network 420. The label 429 may indicate a perception by the privileged neural network 420, such as object identification, object classification, feature detection, and so on. The head module 414 or 424 may include one or more layers, such as a fully-connected layer.

In some embodiments, the head module 414 or 424 may generate multiple labels and the label 419 or 429 may be selected based on a ranking of the labels. For instance, the labels may be ranked based on confidence of the target neural network 410 or privileged neural network 420 on each of the labels. In some embodiments, the perception of the privileged neural network 420 may be of the same type as the perception of the target neural network 410. In other embodiments, the privileged neural network 420 may have been trained to perform different types of perceptions from the target neural network 410.

The privileged information learning process 400 is based on the latent representation 417 and the latent representation 427. The latent representation 427 may include different values or have different dimensions from the latent representation 417. It is considered that the latent representation 427 has "complementary knowledge" for the latent representation 417 and the "knowledge" in the latent representation 427 may be injected into the latent representation 417 in the process of training the target neural network 410 with the privileged neural network 420.

In some embodiments, a privileged loss is determined. The privileged loss indicates a difference between the latent representation 417 and the latent representation 427. In an embodiment (e.g., embodiment where the latent representation 417 and the latent representation 427 are feature maps), the privileged loss may indicate a feature distance between the latent representation 417 and the latent representation 427. During the privileged information learning process 400, internal parameters of the target neural network 410 may be modified to force the latent representation 417 to approximate or even equal the latent representation 427. The privileged loss is reduced or minimized, and the target neural network 410 is trained using knowledge learnt by the privileged neural network 420.

In some embodiments, the privileged loss may be a normed feature distance (e.g., L1 distance, L2 distance, etc.) between the latent representation 417 and the latent representation 427. In some embodiments (e.g., embodiments where the two feature maps have different sizes or shapes), at least one of the feature maps may be resized or reshaped to match the size or shape of the other feature map during the privileged information learning process 400.

In some embodiments, the training of the target neural network 410 also includes a process of minimizing a task loss that indicates a difference between the label 419 and the ground-truth label of the sensor data based on which the target neural network 410 generates the label 419. In an embodiment, internal parameters of the target neural network 410 are modified to minimize an aggregation of the privileged loss and the task loss. The aggregation may be a weighted sum of the privileged loss and the task loss. The weights of the privileged loss and the task loss may be internal parameters of the target neural network 410 that can be determined by training the target neural network 410 or hyperparameters of the target neural network 410 that can be predetermined.

FIG. 5 illustrates multi-sensor based privileged information learning processes 500A and 500B, according to some embodiments of the present disclosure. The privileged information learning processes 500A and 500B are used to train a target neural network 510 using a privileged neural network 520 that is already trained. In some embodiments, the target neural network 510 is to be trained to perform perception tasks using two types of sensors, such as camera sensor, RADAR sensor, and so on. The privileged neural network 520 has been trained to perform perception tasks using a type of sensor (e.g., LIDAR sensors, etc.) that is different from the two types of sensors for the target neural network 510. The knowledge learnt by the privileged neural network 520 during the training can be injected into the target neural network 510 through the privileged information learning processes 500A and 500B.

In the embodiments of FIG. 5, the target neural network 510 includes a sensor data encoder 512A, layers 515A (individually referred to as "layer 515A"), a sensor data encoder 512B, layers 515B (individually referred to as "layer 515B"), a fusion module 516, and a head module 514. The privileged neural network 520 includes a sensor data encoder 522, layers 525 (individually referred to as "layer 525"), and a head module 524. In other embodiments, the target neural network 510 or the privileged neural network 520 may include more, fewer, or different components. For instance, the target neural network 510 or the privileged neural network 520 may include additional layers arranged between, before, or after the layers shown in FIG. 5. The privileged neural network 520 may include more or different layers from the target neural network 510.

The sensor data encoder 512A, 512B, or 522 may encode sensor data, such as sensor data captured by sensors on AVs by detecting environments surrounding the AVs. In some embodiments, the sensor data encoder 512A, 512B, or 522 may transform sensor data to one or more predetermined form that can be processed by the layers 515A, 515B, or 525. For instance, the sensor data encoder 512A, 512B, or 522 may convert one or more images into a bird eye view map, a three-dimensional grid map, a point-based map, or other forms. In some embodiments, the sensor data encoders 512A and 512B receive data captured by different types of sensors. For instance, the sensor data encoder 512A receives data captured by cameras, while the sensor data encoder 512A receives data captured by RADAR sensors.

The layers 515A may be in a backbone network of the target neural network 510. The layers 515B may be in another backbone network of the target neural network 510. The two backbone networks may be for processing data captured by different types of sensors. For instance, the backbone network including the layers 515A may process data captured by cameras, while the backbone network including the layers 515B may process data captured by RADAR sensors. Even though the target neural network 510 includes two backbone networks in the embodiments of FIG. 5, the target neural network 510 may include more backbone networks in other embodiments, e.g., for processing data captured by other types of sensors. The layers 525 may be in a backbone network of the privileged neural network 520.

The layers 515A, layers 515B, or layers 525 may be convolutional layers, pooling layers, self-attention layers, linear layers, non-linear layers, other types of layers, or some combination thereof. In some embodiments, one or more layers 525 in the privileged neural network may be aligned with one or more layers 515A or 515B, or stages in the privileged neural network 520 may be aligned with stages in the target neural network 510. A stage may include one or more layers. For instance, the last layer (e.g., the last convolutional layer) in each of the backbone networks of the target neural network 510 may be aligned with the last layer (e.g., the last convolutional layer) in the privileged neural network 520, or a stage including the last layer (e.g., the last convolutional layer) in each of the backbone networks of the target neural network 510 may align with a stage including the last layer (e.g., the last convolutional layer) in the privileged neural network 520.

In the embodiments of FIG. 5, the last layer in the first backbone network of the target neural network 510 outputs a latent representation 517A of the sensor data received by the sensor data encoder 512A. The last layer in the second backbone network of the target neural network 510 outputs a latent representation 517B of the sensor data received by the sensor data encoder 512B. The last layer of the privileged neural network 520 outputs a latent representation 527 of the sensor data received by the privileged neural network 520. The latent representation 517A, 517B, or 527 may be a feature map. In other embodiments, the latent representation 517A or 517B may be generated by a different layer in the target neural network 510. Similarly, the latent representation 527 may be generated by a different layer in the privileged neural network 520.

The fusion module 516 may receive the latent representation 517A and the latent representation 517B and fuses them into a combined latent representation. The head module 514 receives the combined latent representation from the fusion module 516 and generates a label 519 of the sensor data received by the target neural network 510. The label 519 may indicate a perception by the target neural network 510, such as object identification, object classification, feature detection, and so on. The head module 524 receives the latent representation 527 (or the output of the last layer) and processes the latent representation 527 to generate a label 529 of the sensor data received by the privileged neural network 520. The label 529 may indicate a perception by the privileged neural network 520, such as object identification, object classification, feature detection, and so on. The head module 514 or 524 may include one or more layers, such as a fully-connected layer.

In some embodiments, the head module 514 or 524 may generate multiple labels and the label 519 or 529 may be selected based on a ranking of the labels. For instance, the labels may be ranked based on confidence of the target neural network 510 or privileged neural network 520 on each of the labels. In some embodiments, the perception of the privileged neural network 520 may be of the same type as the perception of the target neural network 510. In other embodiments, the privileged neural network 520 may have been trained to perform different types of perceptions from the target neural network 510.

The privileged information learning process 500A is based on the latent representation 517A and the latent representation 527. The latent representation 527 may include different values or have different dimensions from the latent representation 517A. It is considered that the latent representation 527 has complementary knowledge for the latent representation 517A and the "knowledge" in the latent representation 527 may be injected into the latent representation 517 in the process of training the target neural network 510 with the privileged neural network 520.

In some embodiments, a privileged loss is determined. The privileged loss indicates a difference between the latent representation 517A and the latent representation 527. In an embodiment (e.g., embodiment where the latent representation 517A and the latent representation 527 are feature maps), the privileged loss may indicate a feature distance between the latent representation 517A and the latent representation 527. During the privileged information learning process 500A, internal parameters of the first backbone network of the target neural network 510 may be modified to force the latent representation 517A to approximate or even equal the latent representation 527. The privileged loss is reduced or minimized, and the first backbone network of the target neural network 510 is trained using knowledge learnt by the privileged neural network 520.

In some embodiments, the privileged loss may be a normed feature distance (e.g., L1 distance, L2 distance, etc.) between the latent representation 517A and the latent representation 527. In some embodiments (e.g., embodiments where the two feature maps have different sizes or shapes), at least one of the feature maps may be resized or reshaped to match the size or shape of the other feature map during the privileged information learning process 500A.

Similarly, the privileged information learning process 500B is based on the latent representation 517B and the latent representation 527. The latent representation 527 may include different values or have different dimensions from the latent representation 517B. It is considered that the latent representation 527 has "better knowledge" than the latent representation 517A and the "knowledge" in the latent representation 527 may be injected into the latent representation 517 in the process of training the target neural network 510 with the privileged neural network 520.

In some embodiments, a privileged loss is determined. The privileged loss indicates a difference between the latent representation 517B and the latent representation 527. In an embodiment (e.g., embodiment where the latent representation 517B and the latent representation 527 are feature maps), the privileged loss may indicate a feature distance between the latent representation 517A and the latent representation 527. During the privileged information learning process 500A, internal parameters of the second backbone network of the target neural network 510 may be modified to force the latent representation 517A to approximate or even equal the latent representation 527. The privileged loss is reduced or minimized, and the first backbone network of the target neural network 510 is trained using knowledge learnt by the privileged neural network 520.

In some embodiments, the privileged loss may be a normed feature distance (e.g., L1 distance, L2 distance, etc.) between the latent representation 517B and the latent representation 527. In some embodiments (e.g., embodiments where the two feature maps have different sizes or shapes), at least one of the feature maps may be resized or reshaped to match the size or shape of the other feature map during the privileged information learning process 500B.

In the embodiments of FIG. 5, the privileged information learning processes 500A and 500B are before the fusion of the outputs of the two backbone networks. In addition to or alternative to the privileged information learning processes 500A and 500B, the target neural network 510 may be trained using privileged information learning after the fusion of the outputs of the two backbone networks. For instance, a combined latent representation generated by the fusion module 516 by fusing the latent representation 517A and the latent representation 517B may be forced to approximate or match the latent representation 527 by changing internal parameters in both backbone networks of the target neural network 510. A single privilege loss measuring the difference between the combined latent representation and the latent representation 527 may be used for the post-fusion privileged information learning.

In some embodiments, the training of the target neural network 510 also includes a process of minimizing a task loss that indicates a difference between the label 519 and the ground-truth label of the sensor data based on which the target neural network 510 generates the label 519. In an embodiment, internal parameters of the target neural network 510 are modified to minimize an aggregation of the two privileged losses and the task loss. The aggregation may be a weighted sum of the privileged losses and the task loss. The weights of the privileged losses and the task loss may be internal parameters of the target neural network 510 that can be determined by training the target neural network 510 or hyperparameters of the target neural network 510 that can be predetermined.

*Example Sensor Suite*

FIG. 6 is a block diagram showing the sensor suite 140, according to some embodiments of the present disclosure. The sensor suite 140 may be an onboard sensor suite of an AV, e.g., AV 110 in FIG. 1. The sensor suite 140 includes exterior sensors 610, a LIDAR sensor 620, a RADAR sensor 630, and interior sensors 640. The sensor suite 140 may include any number of the types of sensors shown in FIG. 6, e.g., one or more LIDAR sensors 620, one or more RADAR sensors 630, etc. The sensor suite 140 may have more types of sensors than those shown in FIG. 6, such as the sensors described with respect to FIG. 1. In other embodiments, the sensor suite 140 may not include one or more of the sensors shown in FIG. 6.

The exterior sensors 610 may detect objects in an environment around the AV. The environment may include a scene in which the AV operates. Example objects include objects related to weather (e.g., fog, rain, snow, haze, etc.), persons, buildings, traffic cones, traffic lights, traffic signs, barriers, vehicles, street signs, trees, plants, animals, or other types of objects that may be present in the environment around the AV. In some embodiments, the exterior sensors 610 include exterior cameras having different views, e.g., a front-facing camera, a back-facing camera, and side-facing cameras. One or more exterior sensors 610 may be implemented using a high-resolution imager with a fixed mounting and field of view. One or more exterior sensors 610 may have adjustable fields of view and/or adjustable zooms.

In some embodiments, the exterior sensors 610 may operate continually during operation of the AV. In an example embodiment, the exterior sensors 610 capture sensor data (e.g., images, etc.) of a scene in which the AV drives. In another embodiment, the exterior sensors 610 may operate in accordance with an instruction from the onboard computer 150 or an external system, such as the fleet management system 120. For instance, the onboard computer 150 or fleet management system 120 may request the exterior sensors 610 to detect environmental features and to generate sensor data that can be used for detecting or predicting environmental conditions. Some of all of the exterior sensors 610 may capture sensor data of one or more objects in an environment surrounding the AV based on the instruction.

The LIDAR sensor 620 may measure distances to objects in the vicinity of the AV using reflected laser light. The LIDAR sensor 620 may be a scanning LIDAR that provides a point cloud of the region scanned. The LIDAR sensor 620 may have a fixed field of view or a dynamically configurable field of view. The LIDAR sensor 620 may produce a point cloud that describes, among other things, distances to various objects in the environment of the AV.

The RADAR sensor 630 may measure ranges and speeds of objects in the vicinity of the AV using reflected radio waves. The RADAR sensor 630 may be implemented using a scanning RADAR with a fixed field of view or a dynamically configurable field of view. The RADAR sensor 630 may include one or more articulating RADAR sensors, long-range RADAR sensors, short-range RADAR sensors, or some combination thereof.

The interior sensors 640 may detect the interior of the AV, such as objects inside the AV. Example objects inside the AV include items delivered by the AV, passengers, client devices of passengers, components of the AV, items facilitating services provided by the AV, and so on. The interior sensors 640 may include multiple interior cameras to capture different views, e.g., to capture views of an object inside the AV. The interior sensors 640 may be implemented with a fixed mounting and fixed field of view, or the interior sensors 640 may have adjustable field of views and/or adjustable zooms, e.g., to focus on one or more interior features of the AV. The interior sensors 640 may also include one or more weight sensors, such as weight transducers, that can measure weights of items delivered by the AV.

In some embodiments, the interior sensors 640 may operate continually during operation of the AV. In an example embodiment, the interior sensors 640 capture sensor data (e.g., images, etc.) of one or more items delivered by the AV. In other embodiment, the interior sensors 640 may operate in accordance with an instruction from the onboard computer 150 or an external system, such as the vehicle manager 220 in the fleet management system 120.

In some embodiments, the interior sensors 640 include one or more input sensors that allow passengers to provide input. For instance, a passenger may use an input sensor to provide feedback on AV behaviors during the ride. The input sensors may include touch screen, microphone, keyboard, mouse, or other types of input devices. In an example, the interior sensors 640 include a touch screen that is controlled by the onboard computer 150. The onboard computer 150 may present messages on the touch screen and receive interaction of the passenger with the messages through the touch screen. A message may include information of one or more undesirable AV behaviors in the ride. In some embodiments, some or all of the interior sensors 640 may operate continually during operation of the AV. In other embodiment, some or all of the interior sensors 640 may operate in accordance with an instruction from the onboard computer 150 or an external system, such as the fleet management system 120.

*Example Onboard Computer*

FIG. 7 is a block diagram showing the onboard computer 150 according to some embodiments of the present disclosure. The onboard computer 150 may control an AV, e.g., AV 110 in FIG. 1. As shown in FIG. 7, the onboard computer 150 includes an AV datastore 710, a sensor interface 720, a perception module 730, a control module 740, a control model 750, and a record module 760. In alternative configurations, fewer, different and/or additional components may be included in the onboard computer 150. For example, the onboard computer 150 may include more than one control model 750. As another example, components and modules for conducting route planning, controlling movements of the AV, and other vehicle functions are not shown in FIG. 7. Further, functionality attributed to one component of the onboard computer 150 may be accomplished by a different component included in the onboard computer 150 or a different system, such as the fleet management system 120.

The AV datastore 710 stores data associated with operations of the AV. The AV datastore 710 may store one or more operation records of the AV. An operation record is a record of an operation of the AV, e.g., an operation for providing a ride service. The operation may be a currently performed operation or a previously performed operation ("previous operation" or "historical operation"). The operation record may include information indicating operational behaviors of the AV during the operation. The operational behaviors may include sensor detection, movement, stop, battery charging, calibration, maintenance, communication with the fleet management system 120, communication with assistance agent, communication with user, communication with another AV, and so on. The operations record may also include data used, received, or captured by the AV during the operation, such as map data, instructions from the fleet management system 120, sensor data captured by the AV's sensor suite, and so on. In some embodiments, the AV datastore 710 stores a detailed map that includes a current environment of the AV. The AV datastore 710 may store data in the map datastore 250. In some embodiments, the AV datastore 710 stores a subset of the map datastore 250, e.g., map data for a city or region in which the AV is located.

The data in the AV datastore 710 may include data generated by the AV itself. The data may include sensor data capturing one or more environments where the AV operates, e.g., operates to provide services. The sensor data may be from the sensor suite 140 of the AV. The data in the AV datastore 710 may also include perception data that identifies one or more environmental conditions. The perfection data may be from the perception module 730 of the onboard computer 150 of the AV. The data may also include external data, e.g., data from other AVs or systems. For example, the data in the AV datastore 710 may include data (e.g., sensor data, perception, etc.) from one or more other AVs that capture one or more environments where the other AVs operate. As another example, the data in the AV datastore 710 may include data from the fleet management system 120, e.g., data about environmental conditions, instructions (e.g., operational plans) from the vehicle manager 220, etc. In yet another example, the data in the AV datastore 710 may include data from one or more third-party systems that provide information of environments where the AV operates. The AV may be in communication with the one or more third-party systems, e.g., through a network.

The sensor interface 720 interfaces with the sensors in the sensor suite 140. The sensor interface 720 may request data from the sensor suite 140, e.g., by requesting that a sensor captures data in a particular direction or at a particular time. For example, the sensor interface 720 instructs the sensor suite 140 to capture sensor data of an environment surrounding the AV, e.g., by sending a request for sensor data to the sensor suite 140. In some embodiments, the request for sensor data may specify which sensor(s) in the sensor suite 140 to provide the sensor data, and the sensor interface 720 may request the sensor(s) to capture data. The request may further provide one or more settings of a sensor, such as orientation, resolution, accuracy, focal length, and so on. The sensor interface 720 can request the sensor to capture data in accordance with the one or more settings.

A request for sensor data may be a request for real-time sensor data, and the sensor interface 720 can instruct the sensor suite 140 to immediately capture the sensor data and to immediately send the sensor data to the sensor interface 720. The sensor interface 720 is configured to receive data captured by sensors of the sensor suite 140, including data from exterior sensors mounted to the outside of the AV, and data from interior sensors mounted in the passenger compartment of the AV. The sensor interface 720 may have subcomponents for interfacing with individual sensors or groups of sensors of the sensor suite 140, such as a camera interface, a LIDAR interface, a RADAR interface, a microphone interface, and so on.

The perception module 730 identifies objects and/or other features captured by the sensors of the AV. The perception module 730 may identify objects inside the AV based on sensor data captured by one or more interior sensors (e.g., the interior sensors 440). For instance, the perception module 730 may identify one or more passengers in the AV. In some embodiments, the perception module 730 identifies objects in the environment of the AV and captured by one or more sensors (e.g., the exterior sensors 610, LIDAR sensor 620, RADAR sensor 630, etc.). As another example, the perception module 730 determines one or more environmental conditions based on sensor data from one or more sensors (e.g., the exterior sensors 610, LIDAR sensor 620, RADAR sensor 630, etc.).

The perception module 730 may use trained models to identify objects or features. In some embodiments, a trained model may be a neural network trained using privileged information learning. The trained model may perform multi-sensor vision tasks. In an example, the trained model may be the target neural network 410 in FIG. 4 or the target neural network 510 in FIG. 5 after the training is done.

In some embodiments, the perception module 730 may include one or more classifiers trained using machine learning to identify particular objects. For example, a multi-class classifier may be used to classify each object in the AV or in the environment of the AV as one of a set of potential objects, e.g., a passenger, a vehicle, a pedestrian, or a cyclist. As another example, a passenger classifier recognizes passengers in the AV, a pedestrian classifier recognizes pedestrians in the environment of the AV, a vehicle classifier recognizes vehicles in the environment of the AV, etc. The perception module 730 may identify facial expressions of people, such as passengers, e.g., based on data from interior cameras. The perception module 730 may identify travel speeds of identified objects based on data from the RADAR sensor 630, e.g., speeds at which other vehicles, pedestrians, or birds are travelling. As another example, the perception module 73- may identify distances to identified objects based on data (e.g., a captured point cloud) from the LIDAR sensor 620, e.g., a distance to a particular vehicle, building, or other feature identified by the perception module 730. The perception module 730 may also identify other features or characteristics of objects in the environment of the AV based on image data or other sensor data, e.g., colors (e.g., the colors of winter holiday lights), sizes (e.g., heights of people or buildings in the environment), makes and models of vehicles, pictures and/or words on billboards, etc.

In some embodiments, the perception module 730 fuses data from one or more interior sensors 440 with data from exterior sensors (e.g., exterior sensors 610) and/or AV datastore 710 to identify environmental objects that one or more users are looking at. The perception module 730 determines, based on an image of a user, a direction in which the user is looking, e.g., a vector extending from the user and out of the AV in a particular direction. The perception module 730 compares this vector to data describing features in the environment of the AV, including the features' relative location to the AV (e.g., based on real-time data from exterior sensors and/or the AV's real-time location) to identify a feature in the environment that the user is looking at.

While a single perception module 730 is shown in FIG. 7, in some embodiments, the onboard computer 150 may have multiple perception modules, e.g., different perception modules for performing different ones of the perception tasks described above (e.g., object perception, speed perception, distance perception, feature perception, facial recognition, mood determination, sound analysis, gaze determination, etc.).

The control module 740 controls operations of the AV, e.g., based on information from the sensor interface 720 or the perception module 730. In some embodiments, the control module 740 controls operation of the AV by using the control model 750. The control model 750 may be trained and selected by the vehicle manager 220. Even though FIG. 7 shows a single control model, the control module 740 may use multiple control models to control operations of the AV. The control model 750 may be updated or replaced by one or more new control models over time.

The control module 740 may provide input data to the control model 750, and the control model 750 outputs operation parameters for the AV. The input data may include sensor data from the sensor interface 720 (which may indicate a current state of the AV), objects identified by the perception module 730, data from the fleet management system 120, other data, or some combination thereof. The operation parameters are parameters indicating operation to be performed by the AV. The operation of the AV may include perception, prediction, planning, localization, motion, navigation, other types of operation, or some combination thereof.

The control module 740 may provide instructions to various components of the AV based on the output of the control model, and these components of the AV will operate in accordance with the instructions. In an example where the output of the control model indicates that a change of travelling speed of the AV is required given a prediction of traffic condition, the control module 740 may instruct the motor of the AV to change the travelling speed of the AV. In another example where the output of the control model indicates a need to detect characteristics of an object in the environment around the AV (e.g., detect a speed limit), the control module 740 may instruct the sensor suite 140 to capture an image of the speed limit sign with sufficient resolution to read the speed limit and instruct the perception module 730 to identify the speed limit in the image.

The record module 760 generates operation records of the AV and stores the operations records in the AV datastore 710. The record module 760 may generate an operation record in accordance with an instruction from the fleet management system 120, e.g., the vehicle manager 220. The instruction may specify data to be included in the operation record. The record module 760 may determine one or more timestamps for an operation record. In an example of an operation record for a ride service, the record module 760 may generate timestamps indicating the time when the ride service starts, the time when the ride service ends, times of specific AV behaviors associated with the ride service, and so on. The record module 760 can transmit the operation record to the fleet management system 120.

*Example Method of Multi-Sensor Based Privileged Information Learning*

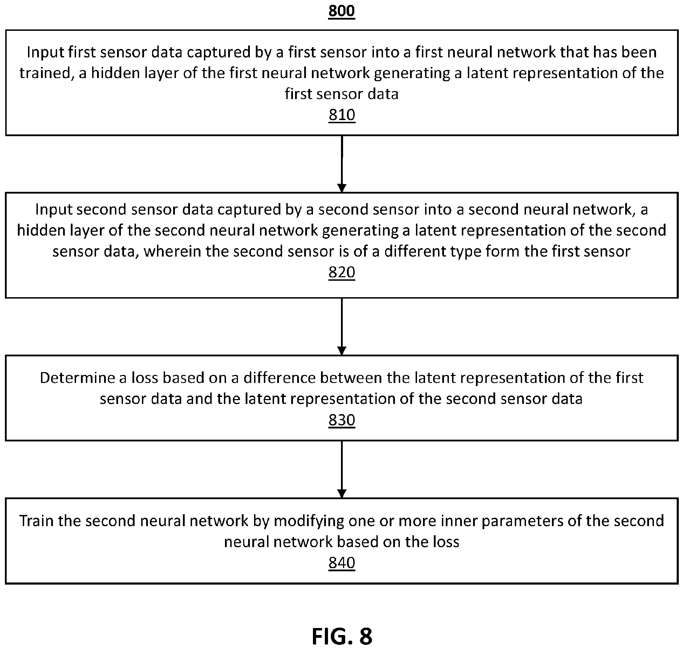

FIG. 8 is a flowchart showing a method 800 of multi-sensor based privileged information learning, according to some embodiments of the present disclosure. The method 800 may be performed by the computer vision module 230. Although the method 800 is described with reference to the flowchart illustrated in FIG. 8, many other methods of integrating volunteering with AV operations may alternatively be used. For example, the order of execution of the steps in FIG. 8 may be changed. As another example, some of the steps may be changed, eliminated, or combined.

The computer vision module 230 inputs 810 first sensor data captured by a first sensor into a first neural network that has been trained. The first neural network may be a privileged neural network. A hidden layer of the privileged neural network generates a latent representation of the first sensor data. In some embodiments, the latent representation is a feature map generated by the hidden layer based on one or more internal parameters of the privileged neural network. The one or more internal parameters of the privileged neural network are determined by training the privileged neural network. In some embodiments, the one or more internal parameters of the privileged neural network are locked, meaning their values are not changed, during the process of training the target neural network.

The computer vision module 230 inputs 820 second sensor data captured by a second sensor into a second neural network. The second neural network may be a target neural network. A hidden layer of the target neural network generates a latent representation of the second sensor data. The second sensor is of a different type from the first sensor. In an embodiment, the first sensor is a LIDAR sensor, and the second sensor is a camera sensor or RADAR sensor. In some embodiments, the target neural network comprises a first backbone network and a second backbone network. The hidden layer of the target neural network is in the first backbone network. The one or more internal parameters are one or more internal parameters of the first backbone network.

In some embodiments, the target neural network further comprises a fusion module. The fusion module is to combine an output of the first backbone network with an output of the second backbone network. In some embodiments, the target neural network further comprises a head module. The head module is to generate a label of the second sensor data based on an output of the fusion module, e.g., for performing a vision task for which the target neural network is trained.

The computer vision module 230 determines 830 a loss based on a difference between the latent representation of the first sensor data and the latent representation of the second sensor data. In some embodiments, the computer vision module 230 determines a task loss based on a difference between an output of the target neural network and a ground-truth label associated with the second sensor data.

The computer vision module 230 trains 840 the target neural network by modifying one or more internal parameters of the target neural network based on the loss. In some embodiments, the computer vision module 230 determines a task loss based on a difference between an output of the target neural network and a ground-truth label associated with the second sensor data. The computer vision module 230 trains the target neural network by modifying the one or more inner parameters of the target neural network based on an aggregation of the loss and the task loss. In some embodiments, the aggregation of the loss and the task loss comprises a weighted sum of the loss and the task loss. In some embodiments, after the target neural network is trained, an operation of a vehicle is controlled using the target neural network. The target neural network is to receive sensor data captured by one or more sensors of the vehicle.

In some embodiments (e.g., embodiments where the target neural network has the first backbone network and second backbone network described above), the computer vision module 230 inputs third sensor data captured by a third sensor into the second backbone network, a hidden layer of the second backbone network generating a latent representation of the third sensor data. The third sensor is of a different type from the first sensor or the second sensor. In an example, the first sensor is a LIDAR sensor, the second sensor is a camera sensor, and the third sensor is a RADAR sensor.

In some embodiments, the computer vision module 230 determines an additional loss based on a difference between the latent representation of the first sensor data and the latent representation of the third sensor data. The computer vision module 230 trains the target neural network by modifying one or more internal parameters of the second backbone network based on the additional loss. In an embodiment, the computer vision module 230 trains the target neural network by modifying the one or more internal parameters of the target neural network based on an aggregation of the loss, the additional loss, and the task loss.

In some embodiments, the target neural network comprises a first backbone network and a second backbone network. The hidden layer of the target neural network is or is before a layer comprising a fusion module that combines an output of the first backbone network with an output of the second backbone network. The one or more inner parameters comprise one or more inner parameters of the first backbone network and one or more inner parameters of the second backbone network.

*Select Examples*

Example 1 provides a method, including inputting first sensor data captured by a first sensor into a first neural network that has been trained, a hidden layer of the first neural network generating a latent representation of the first sensor data; inputting second sensor data captured by a second sensor into a second neural network, a hidden layer of the second neural network generating a latent representation of the second sensor data, where the second sensor is of a different type from the first sensor; determining a loss based on a difference between the latent representation of the first sensor data and the latent representation of the second sensor data; and training the second neural network by modifying one or more internal parameters of the second neural network based on the loss.

Example 2 provides the method of example 1, where the second neural network includes a first backbone network and a second backbone network, the hidden layer of the second neural network is in the first backbone network, and the one or more internal parameters are one or more internal parameters of the first backbone network.

Example 3 provides the method of example 2, further including inputting third sensor data captured by a third sensor into the second backbone network, a hidden layer of the second backbone network generating a latent representation of the third sensor data, where the third sensor is of a different type from the first sensor or the second sensor; determining an additional loss based on a difference between the latent representation of the first sensor data and the latent representation of the third sensor data; and training the second neural network by modifying one or more internal parameters of the second backbone network based on the additional loss.

Example 4 provides the method of example 3, further including determining a task loss based on a difference between an output of the second neural network and a ground-truth label associated with the second sensor data, where training the second neural network includes modifying the one or more internal parameters of the second neural network based on an aggregation of the loss, the additional loss, and the task loss.

Example 5 provides the method of any one of examples 2-4, where the second neural network further includes a fusion module, and the fusion module is to combine an output of the first backbone network with an output of the second backbone network.

Example 6 provides the method of example 5, where the second neural network further includes a head module, and the head module is to generate an output of the second neural network based on an output of the fusion module.

Example 7 provides the method of any one of examples 1-6, where the second neural network includes a first backbone network and a second backbone network, the hidden layer of the second neural network is or is before a layer including a fusion module that combines an output of the first backbone network with an output of the second backbone network, and the one or more internal parameters include one or more internal para-

Example 8 provides the method of any one of examples 1-7, further including determining a task loss based on a difference between an output of the second neural network and a ground-truth label associated with the second sensor data, where training the second neural network includes modifying the one or more internal parameters of the second neural network based on an aggregation of the loss and the task loss.

Example 9 provides the method of example 8, where the aggregation of the loss and the task loss includes a weighted sum of the loss and the task loss.

Example 10 provides the method of any one of examples 1-9, further including after the second neural network is trained, controlling an operation of a vehicle using the second neural network, the second neural network to receive sensor data captured by one or more sensors of the vehicle.

Example 11 provides one or more non-transitory computer-readable media storing instructions executable to perform operations, the operations including inputting first sensor data captured by a first sensor into a first neural network that has been trained, a hidden layer of the first neural network generating a latent representation of the first sensor data; inputting second sensor data captured by a second sensor into a second neural network, a hidden layer of the second neural network generating a latent representation of the second sensor data, where the second sensor is of a different type from the first sensor; determining a loss based on a difference between the latent representation of the first sensor data and the latent representation of the second sensor data; and training the second neural network by modifying one or more internal parameters of the second neural network based on the loss.

Example 12 provides the one or more non-transitory computer-readable media of example 11, where the second neural network includes a first backbone network and a second backbone network, the hidden layer of the second neural network is in the first backbone network, and the one or more internal parameters are one or more internal parameters of the first backbone network.

Example 13 provides the one or more non-transitory computer-readable media of example 12, where the operations further include inputting third sensor data captured by a third sensor into the second backbone network, a hidden layer of the second backbone network generating a latent representation of the third sensor data, where the third sensor is of a different type from the first sensor or the second sensor; determining an additional loss based on a difference between the latent representation of the first sensor data and the latent representation of the third sensor data; and training the second neural network by modifying one or more internal parameters of the second backbone network based on the additional loss.

Example 14 provides the one or more non-transitory computer-readable media of example 13, where the operations further include determining a task loss based on a difference between an output of the second neural network and a ground-truth label associated with the second sensor data, where training the second neural network includes modifying the one or more internal parameters of the second neural network based on an aggregation of the loss, the additional loss, and the task loss.

Example 15 provides the one or more non-transitory computer-readable media of any one of examples 12-14, where the second neural network further includes a fusion module, and the fusion module is to combine an output of the first backbone network with an output of the second backbone network.

Example 16 provides the one or more non-transitory computer-readable media of any one of examples 11-15, where the second neural network includes a first backbone network and a second backbone network, the hidden layer of the second neural network is or is before a layer including a fusion module that combines an output of the first backbone network with an output of the second backbone network, and the one or more internal parameters include one or more internal parameters of the first backbone network and one or more internal parameters of the second backbone network.

Example 17 provides the one or more non-transitory computer-readable media of any one of examples 11-16, where the operations further include after the second neural network is trained, controlling an operation of a vehicle using the second neural network, the second neural network to receive sensor data captured by one or more sensors of the vehicle.

Example 18 provides a computer system, including a computer processor for executing computer program instructions; and one or more non-transitory computer-readable media storing computer program instructions executable by the computer processor to perform operations including: inputting first sensor data captured by a first sensor into a first neural network that has been trained, a hidden layer of the first neural network generating a latent representation of the first sensor data, inputting second sensor data captured by a second sensor into a second neural network, a hidden layer of the second neural network generating a latent representation of the second sensor data, where the second sensor is of a different type from the first sensor, determining a loss based on a difference between the latent representation of the first sensor data and the latent representation of the second sensor data, and training the second neural network by modifying one or more internal parameters of the second neural network based on the loss.

Example 19 provides the computer system of example 18, where the second neural network includes a first backbone network and a second backbone network, the hidden layer of the second neural network is in the first backbone network, and the one or more internal parameters are one or more internal parameters of the first backbone network.

Example 20 provides the computer system of example 19, where the operations further include inputting third sensor data captured by a third sensor into the second backbone network, a hidden layer of the second backbone network generating a latent representation of the third sensor data, where the third sensor is of a different type from the first sensor or the second sensor; determining an additional loss based on a difference between the latent representation of the first sensor data and the latent representation of the third sensor data; and training the second neural network by modifying one or more internal parameters of the second backbone network based on the additional loss..

*Other Implementation Notes, Variations, and Applications*

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

In one example embodiment, any number of electrical circuits of the figures may be implemented on a board of an associated electronic device. The board can be a general circuit board that can hold various components of the internal electronic system of the electronic device and, further, provide connectors for other peripherals. More specifically, the board can provide the electrical connections by which the other components of the system can communicate electrically. Any suitable processors (inclusive of digital signal processors, microprocessors, supporting chipsets, etc.), computer-readable non-transitory memory elements, etc. can be suitably coupled to the board based on particular configuration needs, processing demands, computer designs, etc. Other components such as external storage, additional sensors, controllers for audio/video display, and peripheral devices may be attached to the board as plug-in cards, via cables, or integrated into the board itself. In various embodiments, the functionalities described herein may be implemented in emulation form as software or firmware running within one or more configurable (e.g., programmable) elements arranged in a structure that supports these functions. The software or firmware providing the emulation may be provided on non-transitory computer-readable storage medium comprising instructions to allow a processor to carry out those functionalities.

It is also imperative to note that all of the specifications, dimensions, and relationships outlined herein (e.g., the number of processors, logic operations, etc.)

have only been offered for purposes of example and teaching only. Such information may be varied considerably without departing from the spirit of the present disclosure, or the scope of the appended claims. The specifications apply only to one non-limiting example and, accordingly, they should be construed as such. In the foregoing description, example embodiments have been described with reference to particular arrangements of components. Various modifications and changes may be made to such embodiments without departing from the scope of the appended claims. The description and drawings are, accordingly, to be regarded in an illustrative rather than in a restrictive sense.

Note that with the numerous examples provided herein, interaction may be described in terms of two, three, four, or more components. However, this has been done for purposes of clarity and example only. It should be appreciated that the system can be consolidated in any suitable manner. Along similar design alternatives, any of the illustrated components, modules, and elements of the figures may be combined in various possible configurations, all of which are clearly within the broad scope of this Specification.

Note that in this Specification, references to various features (e.g., elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. Note that all optional features of the systems and methods described above may also be implemented with respect to the methods or systems described herein and specifics in the examples may be used anywhere in one or more embodiments.

**Claims**

1. A method, comprising:

inputting first sensor data captured by a first sensor into a first neural network that has been trained, a hidden layer of the first neural network generating a latent representation of the first sensor data;

inputting second sensor data captured by a second sensor into a second neural network, a hidden layer of the second neural network generating a latent representation of the second sensor data, wherein the second sensor is of a different type from the first sensor;

determining a loss based on a difference between the latent representation of the first sensor data and the latent representation of the second sensor data; and

training the second neural network by modifying one or more internal parameters of the second neural network based on the loss.

2. The method of claim 1, wherein:

   the second neural network comprises a first backbone network and a second backbone network, and

   the hidden layer of the second neural network is in the first backbone network.

3. The method of claim 2, wherein the one or more internal parameters are one or more internal parameters of the first backbone network.

4. The method of claim 2 or 3, further comprising:

   inputting third sensor data captured by a third sensor into the second backbone network, a hidden layer of the second backbone network generating a latent representation of the third sensor data, wherein the third sensor is of a different type from the first sensor or the second sensor;

   determining an additional loss based on a difference between the latent representation of the first sensor data and the latent representation of the third sensor data; and

   training the second neural network by modifying one or more internal parameters of the second backbone network based on the additional loss.

5. The method of claim 4, further comprising: determining a task loss based on a difference between an output of the second neural network and a ground-truth label associated with the second sensor data.

6. The method of claim 5, wherein training the second neural network comprises modifying the one or more internal parameters of the second neural network based on an aggregation of the loss, the additional loss, and the task loss.

7. The method of any one of claims 2-6, wherein the second neural network further comprises a fusion module, and the fusion module is to combine an output of the first backbone network with an output of the second backbone network.

8. The method of claim 7, wherein the second neural network further comprises a head module, and the head module is to generate an output of the second neural network based on an output of the fusion module.

9. The method of any one of claims 1-8, wherein:

   the second neural network comprises a first backbone network and a second backbone network, and

   the hidden layer of the second neural network is or is before a layer comprising a fusion module that combines an output of the first backbone network with an output of the second backbone network.

10. The method of claim 9, wherein:

    the one or more internal parameters comprise one or more internal parameters of the first backbone network and one or more internal parameters of the second backbone network.

11. The method of any one of claims 1-10, further comprising:

    determining a task loss based on a difference between an output of the second neural network and a ground-truth label associated with the second sensor data,

    wherein training the second neural network comprises modifying the one or more internal parameters of the second neural network based on an aggregation of the loss and the task loss.

12. The method of claim 11, wherein the aggregation of the loss and the task loss comprises a weighted sum of the loss and the task loss.

13. The method of any one of claims 1-12, further comprising:
    after the second neural network is trained, controlling an operation of a vehicle using the second neural network, the second neural network to receive sensor data captured by one or more sensors of the vehicle.

14. One or more non-transitory computer-readable media storing instructions executable to perform the method of any one of claims 1-13.

15. A computer system, comprising:

    a computer processor for executing computer program instructions; and
    one or more non-transitory computer-readable media storing computer program instructions executable by the computer processor to perform the method of any one of claims 1-13.

100

Fleet Management System
120

130A

135A

110B

130B

110C

135B

Sensor Suite
140

Onboard Computer
150

110A

**FIG. 1**

Fleet Management System
120

Service Manager
210

Vehicle Manager
220

Computer Vision
Module
230

User Datastore
240

Map Datastore
250

**FIG. 2**

Computer Vision Module
230

Interface Module
310

Training Set
Generator
320

Privileged Model
Generator
330

Target Model
Generator
340

Training Module
350

Validation Module
360

Datastore
370

**FIG. 3**

**Target Neural Network** 410

415     415     415     415     417

Sensor Data Encoder 412

Head Module 414

419

400

**Privileged Neural Network** 420

425     425     425     425     427

Sensor Data Encoder 422

Head Module 424

429

**FIG. 4**

Target Neural Network 510

515A    515A    515A    517A

Sensor Data
Encoder
512A

...

Fusion
Module
516

Head
Module
514

51

515B    515B    515B    517B

Sensor Data
Encoder
512B

...

500A    500B

Privileged Neural Network 520

525    525    525    525    527

Sensor Data
Encoder
522

...

Head
Module
524

529

FIG. 5

Sensor Suite
140

Exterior Sensors
610

LIDAR Sensor 620

RADAR Sensor 630

Interior Sensors
640

FIG. 6

Onboard Computer
150

AV Datastore
710

Sensor Interface
720

Perception Module
730

Control Module
740

Control Model
750

Record Module
760

FIG. 7

**800**

```
┌─────────────────────────────────────────────────────────────────────┐
│ Input first sensor data captured by a first sensor into a first       │
│ neural network that has been trained, a hidden layer of the first     │
│ neural network generating a latent representation of the              │
│ first sensor data                                                     │
│                            810                                        │
└─────────────────────────────────────────────────────────────────────┘
```

```
┌─────────────────────────────────────────────────────────────────────┐
│ Input second sensor data captured by a second sensor into a second    │
│ neural network, a hidden layer of the second neural network           │
│ generating a latent representation of the second sensor data,         │
│ wherein the second sensor is of a different type form the first sensor │
│                            820                                        │
└─────────────────────────────────────────────────────────────────────┘
```

```
┌─────────────────────────────────────────────────────────────────────┐
│ Determine a loss based on a difference between the latent             │
│ representation of the first sensor data and the latent representation  │
│ of the second sensor data                                             │
│                            830                                        │
└─────────────────────────────────────────────────────────────────────┘
```

```
┌─────────────────────────────────────────────────────────────────────┐
│ Train the second neural network by modifying one or more inner        │
│ parameters of the second neural network based on the loss             │
│                            840                                        │
└─────────────────────────────────────────────────────────────────────┘
```

**FIG. 8**

Europäisches
Patentamt

European
Patent Office

Office européen
des brevets

# EUROPEAN SEARCH REPORT

**Application Number**

EP 23 19 2700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CATTANEO D. ET AL: "Global visual localization in LiDAR-maps through shared 2D-3D embedding space", 2020 IEEE INTERNATIONAL CONFERENCE ON ROBOTICS AND AUTOMATION (ICRA), [Online] 10 March 2020 (2020-03-10), pages 4365-4371, XP093125532, DOI: 10.1109/ICRA40945.2020.9196859 ISBN: 978-1-7281-7395-5 Retrieved from the Internet: URL:https://arxiv.org/pdf/1910.04871.pdf> [retrieved on 2024-01-31] equations 2 and 7, section III, III.C; * abstract; figures 2,3 * * section I * | 1-15 | INV. B60W60/00 G06N3/0455 G06N3/0499 G06N3/096 |
| X | TABATA MIZUKI ET AL: "Shape-Net: Room Layout Estimation from Panoramic Images Robust to Occlusion using Knowledge Distillation with 3D Shapes as Additional Inputs", 2023 IEEE/CVF CONFERENCE ON COMPUTER VISION AND PATTERN RECOGNITION WORKSHOPS (CVPRW), [Online] 25 April 2023 (2023-04-25), pages 3552-3561, XP093125738, DOI: 10.1109/CVPRW59228.2023.00363 ISBN: 979-8-3503-0249-3 Retrieved from the Internet: URL:https://arxiv.org/pdf/2304.12624.pdf> [retrieved on 2024-01-31] * figure 2 * | 1-15 | TECHNICAL FIELDS SEARCHED (IPC) B60W G06N |

The present search report has been drawn up for all claims

| Place of search | Date of completion of the search | Examiner |
|---|---|---|
| Munich | 31 January 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)